# EUROPÄISCHE PATENTSCHRIFT

(11) **EP 3 235 784 B1**
(45) Veröffentlichungstag und Bekanntmachung des Hinweises auf die Patenterteilung: **13.01.2021**
(21) Anmeldenummer: 16400011.9
(22) Anmeldetag: 22.04.2016
(51) Int. Cl.: C01B 3/38, C01B 3/56

(54) **VERFAHREN UND ANLAGE ZUR ERZEUGUNG VON WASSERSTOFF MITTELS KATALYTISCHER DAMPFREFORMIERUNG EINES KOHLENWASSERSTOFFHALTIGEN EINSATZGASES**
METHOD AND ASSEMBLY FOR THE PRODUCTION OF HYDROGEN BY CATALYTIC STEAM REFORMING OF A HYDROCARBONACEOUS FEED GAS
PROCÉDÉ ET INSTALLATION POUR LA PRODUCTION D'HYDROGÈNE PAR VAPOREFORMAGE CATALYTIQUE D'UN GAZ D'ALIMENTATION CONTENANT DES HYDROCARBURES

(43) Veröffentlichungstag der Anmeldung: 25.10.2017
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Tadiello, Jean-Philippe, D-60431 Frankfurt am Main (DE); Kang, Taekyu, Newark, DE 19711 (US); Wenz, Thomas, 40476 Düsseldorf (DE)
(74) Vertreter: Dropsch, Holger

(56) Entgegenhaltungen:
- US-A1- 2011 100 214
- US-A1- 2012 148 485

## Beschreibung

### Gebiet der Erfindung

Die Erfindung betrifft ein Verfahren zur Erzeugung von Wasserstoff aus einem kohlenwasserstoffhaltigen Einsatzgas und Wasserdampf, umfassend folgende Verfahrensschritte:
- Umwandlung eines kohlenwasserstoffhaltigen Einsatzgases durch Dampfreformierung in ein hauptsächlich aus Wasserstoff und Kohlenmonoxid bestehendes Synthesegas, wobei für die Dampfreformierung Prozessdampf verwendet wird und wobei die Reformierung in einem Reformerofen durchgeführt wird, der mit mit Katalysator befüllten Reformerrohren und diese beheizenden Brennern ausgestattet ist, die mit verfahrensintem erzeugtem Brenngas und/oder kohlenwasserstoffhaltigem Einsatzgas und mit einem sauerstoffhaltigem Einsatzgas betrieben werden, wobei ein Rauchgas erzeugt wird,
- Abkühlung des erzeugten Synthesegases bis auf eine Temperatur, die für die Behandlung des Synthesegases zur Abtrennung von Wasserstoff nach dem PSA-(pressure swing adsorption)-Verfahren geeignet ist, wobei die Abkühlung des Synthesegases seine Verwendung als Wärmeträgermedium zur Erzeugung von Exportdampf und/oder Prozessdampf und/oder zur thermischen Entgasung von Kesselspeisewasser unter Bildung von wässrigem Kondensat im Synthesegas umfasst, wobei die Erzeugung von Exportdampf und/oder Prozessdampf und/oder die thermische Entgasung von Kesselspeisewasser in Behältern durchgeführt wird, aus denen Entlüftungsströme und/oder Abschlämmströme ausgeleitet werden,
- Abtrennung des Wasserstoffs aus dem abgekühlten Synthesegas unter Anwendung des PSA-Verfahrens, wobei ein Wasserstoff-Reingas und ein PSA-Restgas erhalten werden, Ausleitung des Wasserstoff-Reingases als Verfahrensprodukt, Rückführung des PSA-Restgases als Brenngas zum Betrieb der Brenner des Reformerofens.

Die Erfindung betrifft weiterhin eine Anlage zur Durchführung dieses Verfahrens.

### Stand der Technik

Derartige Verfahren und Anlagen sind an sich bekannt, siehe US 2012/148485 A1. Das diesen zugrunde liegende Verfahren zur katalytischen Dampfreformierung eines kohlenwasserstoffhaltigen Einsatzgases ist beispielsweise in Ullmanns Encyclopedia of Industrial Chemistry, Sixth Edition, Vol. 15, Gas Production, Chapter 2. beschrieben ist. Die Einsatzgase, ein kohlenwasserstoffhaltiges Gas, wie z, B. Erdgas, und Wasserdampf werden dabei bei erhöhtem Druck, z. B. bei 20 bis 35 bar, und hoher Temperatur, z. B. 800 bis 950 °C, durch von außen beheizte, mit Katalysator gefüllte Reaktorrohre geleitet. Dabei werden die Einsatzgase in Wasserstoff- und kohlenmonoxidreiches Synthesegas umgewandelt. Ein derartiger Röhrenreaktor wird häufig als SMR und das Verfahren als SMR-Verfahren bezeichnet (abgekürzt für Steam-Methane-Reformer), wenn Erdgas als Einsatzgas verwendet wird. Für die Abtrennung des Wasserstoffanteils aus dem Synthesegas wird häufig das Pressure-Swing-Adsorption-(PSA)-Verfahren angewandt, das im selben Ullmann-Band, im Kapitel 5.5.3 beschrieben ist.

Für die Wirtschaftlichkeit des Verfahrens ist es sehr wichtig, die für die Aufheizung der Einsatzgase und die Durchführung der in Summe endothermen Reformierungsreaktionen aufgewendete Heizenergie möglichst weitgehend zur Dampferzeugung zu verwenden. Der zusammen mit dem kohlenwasserstoffhaltigen Einsatzgas eingesetzte Wasserdampf wird als Prozessdampf bezeichnet. Er wird durch Wiederverdampfen des aus dem Synthesegas, bei dessen Abkühlung, gebildeten und abgeschiedenen Kondensats, des sogenannten Prozesskondensats, gewonnen. Der Wärmegehalt des Synthesegases und des Rauchgases übersteigt allerdings die zum Erzeugen des Prozessdampfs AIR LIQUIIDE-Aktenzeichen 2016P00138 benötigte Wärmemenge. Um diese Überschusswärme sinnvoll zu nutzen, wird sie zur Erzeugung von sogenanntem Exportdampf genutzt, der hauptsächlich außerhalb des SMR-Prozesses verwendet wird. Um den Exportdampf nicht mit Verunreinigungen aus dem SMR-Prozess zu belasten, wird zu seiner Erzeugung frisches Kesselspeisewasser eingesetzt. Ein Teil des Exportdampfs wird genutzt, um Abschlämmverluste bei der Prozessdampferzeugung auszugleichen.

Verfahren und Anlagen zur Optimierung dieser Wärmerückgewinnung sind z. B. in den folgenden Anmelde- bzw. Patentschriften beschrieben:
DE 10 2004 030 246 A1 beschreibt ein Verfahren und eine Vorrichtung zur Gewinnung von Wasserstoff durch Dampfreformierung, bei dem der dem Entgasungskessel zugeführte Kesselspeisewasserstrom durch den aus dem Kessel abgeführten Strom, mittels. eines Wärmetauschers, erwärmt wird.

DE 10 2010 020 406 A1 beschreibt ein Verfahren zur Herstellung eines Synthesegases, wobei die Wärmerückgewinnung aus dem erzeugten Rauchgas des SMR-Reformers durch Wärmeaustausch mit den Einsatzgasen, Erdgas und Luft, und durch Dampferzeugung dargestellt wird.

DE 10 2010 044 939 B3 beschreibt ein Verfahren zur Erzeugung von Prozessdampf und Kesselspeisewasserdampf in einem Reformierreaktor zur Herstellung von Synthesegas. Dabei wird die Wärmerückgewinnung durch Wärmeaustausch zwischen den Verfahrensproduktströmen Synthesegas und Rauchgas und den Eduktströmen dargestellt.

Das für die Erzeugung des Exportdampfes verwendete Kesselspeisewasser wird vor seiner Verdampfung von enthaltenden Gasen befreit. Dies geschieht durch thermische Entgasung. Dafür wird es in einem Kessel unter leichtem Überdruck zum Sieden gebracht. Das ausgetriebene Gas wird meistens in die Atmosphäre abgelassen. Eine Alternative zum Ablassen in die Atmosphäre wird in der Schrift US 2011/0239864 A1 vorgestellt. In dieser Schrift wird vorgeschlagen, diese Gase dem heißen Rauchgas beizumischen, um auf diese Weise schädliche Bestandteile des Gases zu zerstören. Ein Nebenaspekt der vorliegenden Erfindung ist es, hierfür eine Alternative anzubieten.

Ein weiterer Nebenaspekt der Erfindung besteht darin, die Ausnutzung der für den Dampfreformierungsprozess aufgewendeten Wärmeenergie zu erhöhen. Aus den Dampfkesseln wird kontinuierlich ein kleiner Teil des Wassers abgeschlämmt, um eine Anreicherung von Verunreinigungen zu vermeiden. Diese Abschlämmwässer werden aus den Kesseln unter Druckentspannung ausgeschleust. Der bei der Entspannung entstehende Dampf wird bei den Verfahren und Anlagen des Stands der Technik in die Atmosphäre abgelassen.

### Beschreibung der Erfindung

Die Aufgabe wird im Wesentlichen durch das Verfahren gemäß Anspruch 1 und eine erfindungsgemäße Anlage mit den Merkmalen des Anspruchs 7 gelöst.

### Erfindungsgemäßes Verfahren:

Verfahren zur Erzeugung von Wasserstoff aus einem kohlenwasserstoffhaltigen Einsatzgas und Wasserdampf, umfassend folgende Verfahrensschritte:
a) Umwandlung eines kohlenwasserstoffhaltigen Einsatzgases durch Dampfreformierung in ein hauptsächlich aus Wasserstoff und Kohlenmonoxid bestehendes Synthesegas, wobei für die Dampfreformierung Prozessdampf verwendet wird und wobei die Reformierung in einem Reformerofen durchgeführt wird, der mit mit Katalysator befüllten Reformerrohren und diese beheizenden Brennern ausgestattet ist, die mit verfahrensintem erzeugtem Brenngas und/oder kohlenwasserstoffhaltigem Einsatzgas und mit einem sauerstoffhaltigem Einsatzgas betrieben werden, wobei ein Rauchgas erzeugt wird,
b) Abkühlung des in Teil a) erzeugten Synthesegases bis auf eine Temperatur, die für die Behandlung des Synthesegases zur Abtrennung von Wasserstoff nach dem PSA-(pressure swing adsorption)-Verfahren geeignet ist, wobei die Abkühlung des Synthesegases seine Verwendung als Wärmeträgermedium zur Erzeugung von Exportdampf und/oder Prozessdampf und/oder zur thermischen Entgasung von Kesselspeisewasser unter Bildung von wässrigem Kondensat im Synthesegas umfasst, wobei die Erzeugung von Exportdampf und/oder Prozessdampf und/oder die thermische Entgasung von Kesselspeisewasser in Behältern durchgeführt wird, aus denen Entlüftungsströme und/oder Abschlämmströme ausgeleitet werden,
c) Abtrennung des Wasserstoffs aus dem gemäß Schritt b) abgekühlten Synthesegas unter Anwendung des PSA-Verfahrens, wobei ein Wasserstoff-Reingas und ein PSA-Restgas erhalten werden, Ausleitung des Wasserstoff-Reingases als Verfahrensprodukt, Rückführung des PSA-Restgases als Brenngas zum Schritt a),
**dadurch gekennzeichnet, dass**
das PSA-Restgas in Schritt c) durch indirekten Wärmetausch mit einem oder mehreren der Abschlämmströme und/oder Entlüftungsströme aufgeheizt wird.

### Erfindungsgemäße Anlage:

Anlage zur Erzeugung von Wasserstoff aus einem kohlenwasserstoffhaltigen Einsatzgas und Wasserdampf, umfassend:
- einen Reformerofen, der mit mit Katalysator befüllten Reformerrohren und diese beheizenden Brennern ausgestattet ist, wobei die Brenner für den Betrieb mit verfahrensintem erzeugtem Brenngas und/oder kohlenwasserstoffhaltigem Einsatzgas und mit einem sauerstoffhaltigem Einsatzgas geeignet sind,
- Ableitungen für im Reformerofen erzeugtes Synthesegas und Rauchgas,
- mindestens eine Abkühlvorrichtung zur Abkühlung des im Reformerofen erzeugten Synthesegases, wobei sich die Abkühlvorrichtung in einer Wärmeaustauschbeziehung mit mindestens einem Behälter für die Erzeugung von Exportdampf und/oder Prozessdampf und/oder die thermische Entgasung von Kesselspeisewasser befindet, wobei der mindestens eine Behälter Ableitungen für Entlüftungsströme und/oder Abschlämmströme umfasst,
- eine PSA-Anlage, umfassend eine Zuleitung für abgekühltes Synthesegas und Ableitungen für ein Wasserstoff-Reingas und ein PSA-Restgas, sowie eine Rückführleitung zur Rückführung des PSA-Restgases zu den Brennem,
**gekennzeichnet durch**
- eine Aufheizvorrichtung zur Aufheizung des PSA-Restgases im indirekten Wärmetausch mit mindestens einem Abschlämmstrom und/oder Entlüftungsstrom.

Durch den erfindungsgemäßen Wärmeaustausch kann das Restgas, das in vielen Fällen mit ca. 30 °C die PSA-Anlage verlässt, auf schätzungsweise 80 °C erwärmt und so als Brenngas den Brennem des SMR-Reformers zugeführt werden.

### Bevorzugte Ausgestaltungen der Erfindung

Eine bevorzugte Ausgestaltung des erfindungsgemäßen Verfahrens besteht darin, dass die Abkühlung des Synthesegases auch den Wärmeaustausch mit Umgebungsluft und/oder Kühlwasser umfasst. Auf diese Weise kann die Abkühlung, zum Teil unabhängig von den Erfordernissen der Dampferzeugung, durchgeführt werden.

Eine weitere bevorzugte Ausgestaltung des erfindungsgemäßen Verfahrens besteht darin, dass auch das gemäß Anspruch 1, Schritt a) erzeugte Rauchgas durch dessen Verwendung als Wärmeträgermedium bei der Erzeugung von Export- und/oder Prozessdampf abgekühlt wird. Hier durch wird auch die im Rauchgas vorhandene Wärmeenergie genutzt.

Eine weitere bevorzugte Ausgestaltung des erfindungsgemäßen Verfahrens besteht darin, dass das im Synthesegas gebildete Kondensat mechanisch abgetrennt und als Einsatzmaterial für die Erzeugung von Prozessdampf verwendet wird. Die mechanische Kondensatabscheidung ist seit langem technisch bewährt und verursacht nicht zu hohe Energie- und Investitionskosten.

Eine weitere bevorzugte Ausgestaltung des erfindungsgemäßen Verfahrens besteht darin, dass die Abschlämmströme entspannt, die dabei entstandenen Entspannungsgase und Entspannungsdämpfe abgetrennt und zur Aufheizung des Restgases durch indirekten Wärmeaustausch verwendet werden. Da dieser Entspannungsschritt sowieso erforderlich ist, um die Abschlämmströme aus dem Verfahren auszuschleusen, entsteht kein zusätzlicher Aufwand. Für den Transport der Entspannungsgase und -dämpfe zu dem für die Aufheizung des Restgases verwendeten Wärmetauscher sind lediglich Rohrleitungen erforderlich und keine Pumpe, wie es für den Transport der flüssigen Abschlämmströme in vielen Fällen notwendig wäre.

Eine weitere bevorzugte Ausgestaltung des erfindungsgemäßen Verfahrens besteht darin, dass die Entspannungsgase und Entspannungsdämpfe und die Entlüftungsströme nach dem Wärmeaustausch mit dem PSA-Restgas dem sauerstoffhaltigen Einsatzgas, das für den Betrieb der Brenner verwendet wird, beigemischt werden. Gesundheits- und umweltschädliche Bestandteile werden dabei durch Verbrennen zerstört, d.h. hauptsächlich in Kohlendioxid und Wasserdampf umgewandelt, die mit dem Rauchgas an die Umwelt abgegeben werden können.

Eine bevorzugte Ausgestaltung der erfindungsgemäßen Anlage besteht darin, dass sie mindestens einen Wärmetauscher zur Abkühlung des Synthesegases durch Wärmeaustausch mit Umgebungsluft und/oder Kühlwasser. Durch eine derartige apparative Ausstattung kann die Abkühlung unabhängiger von den Erfordernissen der Dampferzeugung durchgeführt werden.

Eine weitere bevorzugte Ausgestaltung der erfindungsgemäßen Anlage besteht darin, dass sie einen Wärmetauscher zur Abkühlung des Rauchgases umfasst, wobei sich der Wärmetauscher zur Abkühlung des Rauchgases in einer Wärmeaustauschbeziehung mit mindestens einem Behälter für die Erzeugung von Exportdampf und/oder Prozessdampf und/oder die thermische Entgasung von Kesselspeisewasser befindet. Vorteilhaft ist es, wenn der Wärmetauscher in den Kanal zur Abfuhr des Rauchgases aus dem Reformer hineinragt, sodass die Wärmeaustauschflächen direkt vom Rauchgas umströmt werden.

Eine weitere bevorzugte Ausgestaltung der erfindungsgemäßen Anlage besteht darin, dass die Anlage eine mechanische Trennvorrichtung zur Abtrennung des im Synthesegas gebildeten Kondensats umfasst, sowie eine Ableitung des Kondensats aus der Trennvorrichtung und eine Zuleitung des Kondensats zu einem Behälter für die Erzeugung von Prozessdampf. Eine mechanische Tropfenabscheidung ist vorteilhaft da seit langem technisch bewährt ist und nicht zu hohe Energie- und Investitionskosten verursacht.

Eine weitere bevorzugte Ausgestaltung der erfindungsgemäßen Anlage besteht darin, dass sie eine Entspannungsvorrrichtung zur Entspannung des mindestens einen Abschlämmstroms, eine Trennvorrichtung zur Abtrennung der bei der Entspannung des mindestens einen Abschlämmstroms erzeugten Entspannungsgase und Entspannungsdämpfe und einen Wärmetauscher zur Durchführung eines indirekten Wärmetauschs zwischen den Entspannungsgasen und Entspannungsdämpfen und dem PSA-Restgas umfasst. Diese Ausgestaltung ist vorteilhaft, da die Entspannung der Abschlämmströme sowieso erforderlich ist, um sie aus dem Verfahren auszuschleusen, entsteht kein zusätzlicher Aufwand durch die Entspannungsvorrichtung. Vorteilhaft ist weiterhin, dass für den Transport der Entspannungsgase und -dämpfe zu dem für die Aufheizung des Restgases verwendeten Wärmetauscher lediglich Rohrleitungen erforderlich sind und keine Pumpe benötigt wird, wie es für den Transport der flüssigen Abschlämmströme in vielen Fällen der Fall wäre.

Eine weitere bevorzugte Ausgestaltung der erfindungsgemäßen Anlage besteht darin, dass sie eine Ableitung für die Entspannungsgase und/oder Entspannungsdämpfe und/oder Entlüftungsströme nach Durchführung des Wärmeaustauschs mit dem PSA-Restgas sowie eine Mischvorrichtung zur Beimischung dieser Gase und/oder Dämpfe zum sauerstoffhaltigen Einsatzgas für den Betrieb der Brenner umfasst. Dabei ist es vorteilhaft, dass es durch diese Ableitung ermöglicht wird, dass Gesundheits- und umweltschädliche Bestandteile durch Verbrennen zerstört werden, wobei sie hauptsächlich in Kohlendioxid und Wasserdampf umgewandelt werden, die mit dem Rauchgas an die Umwelt abgegeben werden können.

### Ausführungsbeispiel

Weitere Merkmale, Vorteile und Anwendungsmöglichkeiten der Erfindung ergeben sich auch aus der nachfolgenden Beschreibung eines Ausführungs- und Zahtenbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

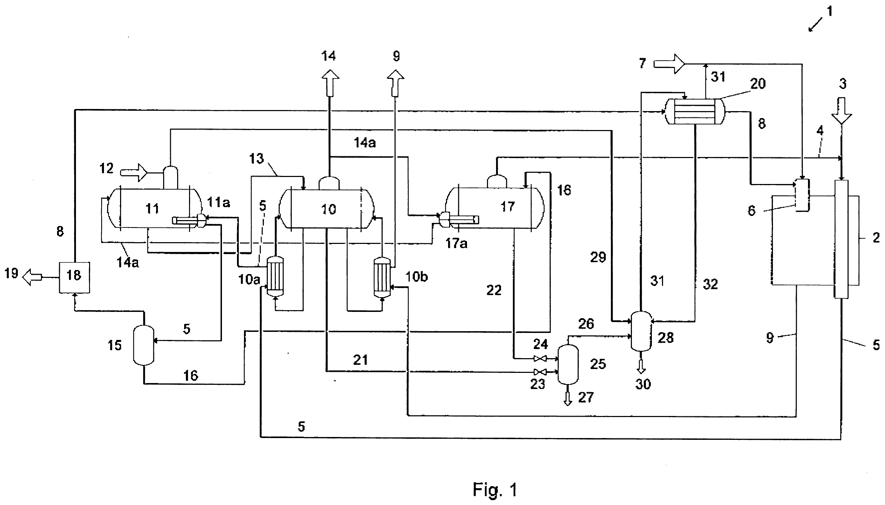

Das erfindungsgemäße Verfahren soll im Folgenden anhand der Zeichnung Fig. 1 erläutert werden. Dabei zeigt:
- Fig. 1: ein Fließbild einer beispielhaften Ausführung der erfindungsgemäßen Anlage

Das in Fig. 1 dargestellte Fließbild zeigt eine beispielhafte Ausführung der erfindungsgemäßen Anlage 1 zur Erzeugung von Wasserstoff aus einem kohlenwasserstoffhaltigen Einsatzgas, wie z. B. Erdgas und Wasserdampf. Dargestellt sind nur die zum Verständnis der Erfindung wesentlichen Teile der Anlage bzw. des Verfahrens.

In dem als Röhrenofen ausgeführten SMR-Reformer 2 wird das aus Erdgas 3 und Prozessdampf 4 bestehende Einsatzgas in hauptsächlich aus Kohlenmonoxid und Wasserstoff bestehendes Synthesegas 5 umgewandelt. Der SMR-Reformer 2 wird mit Brennern 6, von denen hier nur einer dargestellt ist, beheizt, die mit Luft 7 und Brenngas 8 betrieben werden, wobei ein Rauchgas 9 erzeugt wird. Um die im Synthesegas 5 und im Rauchgas 9 enthaltene Wärme zu nutzen, werden diese als Wärmeträgermedium zur Beheizung des Dampfkessels 10, mittels der Wärmetauscher 10a und 10b, und das Synthesegas 5 zusätzlich auch zur Beheizung des Entgasungskessels 11, mittels des Wärmetauschers 11a, verwendet. Im Entgasungskessel 11 wird Kesselspeisewasser 12 thermisch entgast und über Leitung 13 in den Dampfkessel 10 gegeben, in dem es zu Exportdampf 14 verdampft wird. Das Rauchgas 9 wird anschließend zur weiteren Behandlung aus dem Verfahren ausgeleitet. In Kondensatabscheider 15 wird im Synthesegas gebildetes wässriges Kondensat 16 abgetrennt und in Dampfkessel 17 eingeleitet. Dort wird es, mittels des Wärmetauschers 17a, zu Prozessdampf 4 verdampft, wobei ein Teilstrom des Exportdampfs 14a als Wärmeträgermedium verwendet und anschließend in den Entgasungskessel 11 eingeführt wird. Nach der Kondensatabscheidung wird das Synthesegas 5 in der PSA-Anlage 18 behandelt, wobei der Wasserstoffanteil 19 aus dem Synthesegas abgetrennt und als Produkt bzw. zur weiteren Behandlung aus der Anlage bzw. dem Verfahren ausgeleitet wird. Das nach der Wasserstoffabtrennung verbleibende Restgas 8 wird in Wärmetauscher 20 erwärmt und als Brenngas den Brennern 6 des SMR-Reformers 2 zugeleitet.

Aus den Dampfkesseln 10 und 17 werden die Abschlämmwässer 21 und 22 in den Flüssig-Gas-Abscheider 25 eingeleitet. Dabei werden die Abschlämmwässer in den Ventilen 23 bzw. 24 entspannt. Durch die Entspannung wird ein Teil der Wässer verdampft. Im Abscheider 25 werden die Flüssig- und die Dampfphase getrennt. Die Dampfphase wird über Leitung 26 in den Kondensatabscheider 28 geleitet. Die wässrige Phase wird als Strom 27 aus Abscheider 25 aus- und der weiteren Behandlung zugeleitet. In den Kondensatabscheider 28 werden ebenfalls die aus dem Kesselspeisewasser 12 abgetrennten Gase und Dämpfe als Strom 29 eingeleitet. Im Kondensatabscheider 28 werden die Gas-bzw. Dampfströme 26 und 29 vermischt, Kondensat wird abgeschieden und als Strom 30 einer weiteren Behandlung zugeführt. Die Gas-Dampf-Phase 31 wird in den Wärmetauscher 20 eingeleitet und erwärmt dort den Rest- bzw. Brenngasstrom 8. Dabei gebildetes Kondensat wird aus Phase 31 im Wärmetauscher 20 abgetrennt und als Strom 32 in den Kondensatabscheider 28 zurückgeführt. Nach Verlassen des Wärmetauschers 20 wird der gasförmig verbliebene Teil des Stroms 31 in den Luftstrom 7 eingeführt und damit der Verbrennung zugeführt.

### Gewerbliche Anwendbarkeit

Durch die Erfindung wird der Anteil der prozessintern wiederverwendeten Wärmeenergie bei diesem bereits gewerblich etablierten Verfahren zur Wasserstofferzeugung erhöht. Die Erfindung ist daher gewerblich anwendbar.

### Bezugszeichenliste

- 1: Erfindungsgemäße Anlage
- 2: SMR-Reformer
- 3: Erdgasstrom
- 4: Prozessdampf
- 5: Synthesegas
- 6: Brenner
- 7: Luft zur Verbrennung
- 8: Rest-/Brenngas
- 9: Rauchgas
- 10: Dampfkessel für Exportdampf, mit Wärmetauschern 10a, b
- 11: Entgasungskessel mit Wärmetauscher 11a
- 12: Kesselspeisewasser, frisch
- 13: Kesselspeisewasser, entgast
- 14: Exportdampf, Teilstrom Exportdampf 14a
- 15: Kondensatabscheider
- 16: Kondensat
- 17: Dampfkessel für Prozessdampf, mit Wärmetauscher 17a
- 18: Rest-/Brenngas
- 19: Wasserstoff
- 20: Wärmetauscher
- 21: Abschlämmwasser
- 22: Abschlämmwasser
- 23: Ventil
- 24: Ventil
- 25: Flüssig-Gas-Abscheider
- 26: Dampfphase
- 27: Wässrige Phase
- 28: Kondensatabscheider
- 29: Abgetrennte Gase
- 30: Kondensat
- 31: Gas-Dampf-Phase
- 32: Kondensat

## Patentansprüche

1. Verfahren zur Erzeugung von Wasserstoff aus einem kohlenwasserstoffhaltigen Einsatzgas und Wasserdampf, umfassend folgende Verfahrensschritte:
a) Umwandlung eines kohlenwasserstoffhaltigen Einsatzgases durch Dampfreformierung in ein hauptsächlich aus Wasserstoff und Kohlenmonoxid bestehendes Synthesegas, wobei für die Dampfreformierung Prozessdampf verwendet wird und wobei die Reformierung in einem Reformerofen durchgeführt wird, der mit mit Katalysator befüllten Reformerrohren und diese beheizenden Brennern ausgestattet ist, die mit verfahrensintern erzeugtem Brenngas und/oder kohlenwasserstoffhaltigem Einsatzgas und mit einem sauerstoffhaltigem Einsatzgas betrieben werden, wobei ein Rauchgas erzeugt wird,
b) Abkühlung des in Teil a) erzeugten Synthesegases bis auf eine Temperatur, die für die Behandlung des Synthesegases zur Abtrennung von Wasserstoff nach dem PSA-(pressure swing adsorption)-Verfahren geeignet ist, wobei die Abkühlung des Synthesegases seine Verwendung als Wärmeträgermedium zur Erzeugung von Exportdampf und/oder Prozessdampf und/oder zur thermischen Entgasung von Kesselspeisewasser unter Bildung von wässrigem Kondensat im Synthesegas umfasst, wobei die Erzeugung von Exportdampf und/oder Prozessdampf und/oder die thermische Entgasung von Kesselspeisewasser in Behältern durchgeführt wird, aus denen Entlüftungsströme und/oder Abschlämmströme ausgeleitet werden,
c) Abtrennung des Wasserstoffs aus dem gemäß Schritt b) abgekühlten Synthesegas unter Anwendung des PSA-Verfahrens, wobei ein Wasserstoff-Reingas und ein PSA-Restgas erhalten werden, Ausleitung des Wasserstoff-Reingases als Verfahrensprodukt, Rückführung des PSA-Restgases als Brenngas zum Schritt a),
**dadurch gekennzeichnet, dass**
das PSA-Restgas in Schritt c) durch indirekten Wärmetausch mit einem oder mehreren der Abschlämmströme und/oder Entlüftungsströme aufgeheizt wird.

2. Verfahren gemäß Anspruch 1, **dadurch gekennzeichnet, dass** die Abkühlung des Synthesegases auch den Wärmeaustausch mit Umgebungsluft und/oder Kühlwasser umfasst.

3. Verfahren gemäß Anspruch 1 oder 2, **dadurch gekennzeichnet, dass** auch das gemäß Anspruch 1, Schritt a) erzeugte Rauchgas durch dessen Verwendung als Wärmeträgermedium bei der Erzeugung von Export- und/oder Prozessdampf abgekühlt wird.

4. Verfahren gemäß mindestens einem der vorhergehenden Ansprüche, **dadurch gekennzeichnet, dass** das im Synthesegas gebildete Kondensat mechanisch abgetrennt und als Einsatzmaterial für die Erzeugung von Prozessdampf verwendet wird.

5. Verfahren gemäß mindestens einem der vorhergehenden Ansprüche, **dadurch gekennzeichnet, dass** die Abschlämmströme entspannt, die dabei entstandenen Entspannungsgase und Entspannungsdämpfe abgetrennt und zur Aufheizung des Restgases durch indirekten Wärmeaustausch verwendet werden.

6. Verfahren gemäß Anspruch 5, **dadurch gekennzeichnet, dass** die Entspannungsgase und Entspannungsdämpfe und die Entlüftungsströme nach dem Wärmeaustausch mit dem PSA-Restgas dem sauerstoffhaltigen Einsatzgas, das für den Betrieb der Brenner verwendet wird, beigemischt werden.

7. Anlage zur Erzeugung von Wasserstoff aus einem kohlenwasserstoffhaltigen Einsatzgas und Wasserdampf, umfassend:
- einen Reformerofen, der mit mit Katalysator befüllten Reformerrohren und diese beheizenden Brennern ausgestattet ist, wobei die Brenner für den Betrieb mit verfahrensintern erzeugtem Brenngas und/oder kohlenwasserstoffhaltigem Einsatzgas und mit einem sauerstoffhaltigem Einsatzgas geeignet sind,
- Ableitungen für im Reformerofen erzeugtes Synthesegas und Rauchgas,
- mindestens eine Abkühlvorrichtung zur Abkühlung des im Reformerofen erzeugten Synthesegases, wobei sich die Abkühlvorrichtung in einer Wärmeaustauschbeziehung mit mindestens einem Behälter für die Erzeugung von Exportdampf und/oder Prozessdampf und/oder die thermische Entgasung von Kesselspeisewasser befindet, wobei der mindestens eine Behälter Ableitungen für Entlüftungsströme und/oder Abschlämmströme umfasst,
- eine PSA-Anlage, umfassend eine Zuleitung für abgekühltes Synthesegas und Ableitungen für ein Wasserstoff-Reingas und ein PSA-Restgas, sowie eine Rückführleitung zur Rückführung des PSA-Restgases zu den Brennern,
**gekennzeichnet durch**
- eine Aufheizvorrichtung zur Aufheizung des PSA-Restgases im indirekten Wärmetausch mit mindestens einem Abschlämmstrom und/oder Entlüftungsstrom.

8. Anlage nach Anspruch 7, ferner umfassend einen Wärmetauscher zur Abkühlung des Synthesegases durch Wärmeaustausch mit Umgebungsluft und/oder Kühlwasser.

9. Anlage nach Anspruch 7 oder 8, ferner umfassend einen Wärmetauscher zur Abkühlung des Rauchgases, wobei sich der Wärmetauscher zur Abkühlung des Rauchgases in einer Wärmeaustauschbeziehung mit mindestens einem Behälter für die Erzeugung von Exportdampf und/oder Prozessdampf und/oder die thermische Entgasung von Kesselspeisewasser befindet.

10. Anlage nach einem der vorhergehenden Ansprüche, ferner umfassend eine mechanische Trennvorrichtung zur Abtrennung des im Synthesegas gebildeten Kondensats, sowie eine Ableitung des Kondensats aus der Trennvorrichtung und eine Zuleitung des Kondensats zu einem Behälter für die Erzeugung von Exportdampf und/oder Prozessdampf.

11. Anlage nach einem der vorhergehenden Ansprüche, ferner umfassend eine Entspannungsvorrrichtung zur Entspannung des mindestens einen Abschlämmstroms, eine Trennvorrichtung zur Abtrennung der bei der Entspannung des mindestens einen Abschlämmstroms erzeugten Entspannungsgase und Entspannungsdämpfe und einen Wärmetauscher zur Durchführung eines indirekten Wärmetauschs zwischen den Entspannungsgasen und Entspannungsdämpfen und dem PSA-Restgas.

12. Anlage nach einem der vorhergehenden Ansprüche, ferner umfassend mindestens eine Ableitung für die Entspannungsgase und/oder Entspannungsdämpfe und/oder Entlüftungsströme nach Durchführung des Wärmeaustauschs mit dem PSA-Restgas sowie eine Mischvorrichtung zur Beimischung dieser Gase und/oder Dämpfe zum sauerstoffhaltigen Einsatzgas für den Betrieb der Brenner.

## Claims

1. Method for producing hydrogen from a hydrocarbonaceous feed gas and steam, comprising the following method steps:
a) conversion of a hydrocarbonaceous feed gas by steam reformation into a synthesis gas mainly consisting of hydrogen and carbon monoxide, wherein process steam is used for the steam reformation and wherein the reformation is carried out in a reformer furnace which is equipped with reformer tubes filled with catalyst and burners heating said tubes, which are operated with fuel gas and/or hydrocarbonaceous feed gas produced within the method and with an oxygen-containing feed gas, wherein a flue gas is produced,
b) cooling of the synthesis gas produced in part a) to a temperature which is suitable for the treatment of the synthesis gas in order to separate hydrogen by the PSA (pressure swing adsorption) method, wherein the cooling of the synthesis gas comprises its use as heat-transfer medium for generating export steam and/or process steam and/or for the thermal degasification of boiler feed water by forming aqueous condensate in the synthesis gas, wherein the generation of export steam and/or process steam and/or the thermal degasification of boiler feed water is carried out in containers from which vent streams and/or blowdown streams are discharged,
c) separation of the hydrogen from the synthesis gas cooled according to step b) using the PSA method, wherein a clean hydrogen gas and a PSA residual gas are obtained, discharge of the clean hydrogen gas as method product, recirculation of the PSA residual gas as fuel gas to step a),
**characterised in that**
in step c) the PSA residual gas is heated by indirect heat exchange with one or more of the blowdown streams and/or vent streams.

2. Method according to claim 1, **characterised in that** the cooling of the synthesis gas also comprises the heat exchange with ambient air and/or cooling water.

3. Method according to claim 1 or 2, **characterised in that** the flue gas produced according to claim 1, step a) is also cooled by its use as heat-transfer medium in the generation of export and/or process steam.

4. Method according to at least one of the preceding claims, **characterised in that** the condensate formed in the synthesis gas is mechanically separated and used as feed material for the generation of process steam.

5. Method according to at least one of the preceding claims, **characterised in that** the blowdown streams are depressurised, the resulting depressurising gases and depressurising vapours are separated and used for heating the residual gas by indirect heat exchange.

6. Method according to claim 5, **characterised in that**, after the heat exchange with the PSA residual gas, the depressurising gases and depressurising vapours and the vent streams are admixed to the oxygen-containing feed gas which is used for the operation of the burners.

7. Plant for producing hydrogen from a hydrocarbonaceous feed gas and steam, comprising:
- a reformer furnace which is equipped with reformer tubes filled with catalyst and burners heating said tubes, wherein the burners are suitable for operation with fuel gas and/or hydrocarbonaceous feed gas produced within the method and with an oxygen-containing feed gas,
- discharge ducts for synthesis gas and flue gas produced in the reformer furnace,
- at least one cooling device for cooling the synthesis gas produced in the reformer furnace, wherein the cooling device is in a heat-exchange relationship with at least one container for the generation of export steam and/or process steam and/or the thermal degasification of boiler feed water, wherein the at least one container comprises discharge ducts for vent streams and/or blowdown streams,
- a PSA plant, comprising a feed duct for cooled synthesis gas and discharge ducts for a clean hydrogen gas and a PSA residual gas, as well as a return duct for recirculating the PSA residual gas to the burners,
**characterised by**
- a heating device for heating the PSA residual gas by indirect heat exchange with at least one blowdown stream and/or vent stream.

8. Plant according to claim 7, further comprising a heat exchanger for cooling the synthesis gas by heat exchange with ambient air and/or cooling water.

9. Plant according to claim 7 or 8, further comprising a heat exchanger for cooling the flue gas, wherein the heat exchanger for cooling the flue gas is in a heat-exchange relationship with at least one container for the generation of export steam and/or process steam and/or the thermal degasification of boiler feed water.

10. Plant according to any of the preceding claims, further comprising a mechanical separating device for separating the condensate formed in the synthesis gas, as well as a duct for discharging the condensate from the separating device and a duct for feeding the condensate to a container for the generation of export steam and/or process steam.

11. Plant according to any of the preceding claims, further comprising a depressurising device for depressurising the at least one blowdown stream, a separating device for separating the depressurising gases and depressurising vapours produced during the depressurisation of the at least one blowdown stream, and a heat exchanger for carrying out an indirect heat exchange between the depressurising gases and depressurising vapours and the PSA residual gas.

12. Plant according to any of the preceding claims, further comprising at least one discharge duct for the depressurising gases and/or depressurising vapours and/or vent streams after the heat exchange with the PSA residual gas is carried out, as well as a mixing device for admixing these gases and/or vapours to the oxygen-containing feed gas for the operation of the burners.

## Revendications

1. Procédé de production d'hydrogène à partir d'un gaz de départ contentant des hydrocarbures et de vapeur d'eau, comprenant les étapes de procédé suivantes :
a) transformation d'un gaz de départ contenant des hydrocarbures par reformage à la vapeur en un gaz de synthèse se composant principalement d'hydrogène et de monoxyde de carbone, dans lequel de la vapeur de traitement est utilisée pour le reformage à la vapeur et dans lequel le reformage est réalisé dans un four de reformage, qui est équipé de tubes de reformage remplis de catalyseurs et ces brûleurs de chauffage, qui fonctionnent avec le gaz combustible produit selon le procédé et/ou le gaz de départ contenant des hydrocarbures et avec un gaz de départ contenant de l'oxygène, dans lequel un gaz de fumée est produit,
b) refroidissement du gaz de synthèse produit dans la partie a) jusqu'à une température, qui est appropriée au traitement du gaz de synthèse pour la séparation d'hydrogène selon le procédé d'adsorption par inversion de pression (PSA), dans lequel le refroidissement du gaz de synthèse comprend son utilisation en tant qu'agent caloporteur pour la production de vapeur d'export et/ou de vapeur de traitement et/ou pour le dégazage thermique de l'eau d'alimentation des chaudières en formant un condensat aqueux dans le gaz de synthèse, dans lequel la production de vapeur d'export et/ou de vapeur de traitement et/ou le dégazage thermique de l'eau d'alimentation des chaudières est réalisé(e)(s) dans des réservoirs, d'où sont évacués des courants de ventilation et/ou des courants de purge,
c) séparation de l'hydrogène du gaz de synthèse refroidi selon l'étape b) en utilisant le procédé de PSA, dans lequel un gaz épuré d'hydrogène et un gaz résiduel de PSA sont obtenus, évacuation du gaz épuré d'hydrogène en tant que produit de procédé, recyclage du gaz résiduel de PSA en tant que gaz combustible à l'étape a),
**caractérisé en ce que**
le gaz résiduel de PSA à l'étape c) est chauffé par échange de chaleur indirecte avec un ou plusieurs des courants de purge et/ou courants de ventilation.

2. Procédé selon la revendication 1, **caractérisé en ce que** le refroidissement du gaz de synthèse comprend également l'échange de chaleur avec l'air ambiant et/ou l'eau de refroidissement.

3. Procédé selon la revendication 1 ou 2, **caractérisé en ce qu'**également le gaz de fumée produit selon la revendication 1, étape a) est refroidi par son utilisation en tant qu'agent caloporteur lors de la production de vapeur d'export et/ou de vapeur de traitement.

4. Procédé selon au moins l'une quelconque des revendications précédentes, **caractérisé en ce que** le condensat formé dans le gaz de synthèse est séparé mécaniquement et est utilisé en tant que charge d'alimentation pour la production de vapeur de traitement.

5. Procédé selon au moins l'une quelconque des revendications, **caractérisé en ce que** les courants de purge sont détendus, les gaz de détente et les vapeurs de détente ainsi obtenus sont séparés et utilisés pour le chauffage du gaz résiduel par échange de chaleur indirect.

6. Procédé selon la revendication 5, **caractérisé en ce que** les gaz de détente et les vapeurs de détente et les courants de ventilation après l'échange de chaleur avec le gaz résiduel de PSA sont mélangés au gaz de départ contenant de l'oxygène, qui est utilisé pour le fonctionnement du brûleur.

7. Installation de production d'hydrogène à partir d'un gaz de départ contenant des hydrocarbures et de la vapeur d'eau, comprenant :
- un four de reformage, qui est équipé de tubes de reformage remplis de catalyseurs et ces brûleurs de chauffage, dans laquelle les brûleurs sont appropriés pour le fonctionnement avec le gaz combustible produit selon le procédé et/ou le gaz de départ contenant des hydrocarbures et avec un gaz de départ contenant de l'oxygène,
- des évacuations pour le gaz de synthèse produit dans le four de reformage et du gaz de fumée,
- au moins un dispositif de refroidissement destiné à refroidir le gaz de synthèse produit dans le four de reformage, dans laquelle le dispositif de refroidissement se trouve dans une relation d'échange de chaleur avec au moins un réservoir pour la production d'une vapeur d'export et/ou d'une vapeur de traitement et/ou le dégazage thermique de l'eau d'alimentation des chaudières, dans laquelle l'au moins un réservoir comprend des évacuations pour les courants de ventilation et/ou les courants de purge,
- une installation de PSA, comprenant une conduite d'amenée pour le gaz de synthèse refroidi et des conduites d'amenée pour un gaz épuré d'hydrogène et un gaz résiduel de PSA, ainsi qu'une conduite de recyclage pour le retour du gaz résiduel de PSA aux brûleurs,
**caractérisé par**
- un dispositif de chauffage pour chauffer le gaz résiduel de PSA par échange de chaleur indirect avec au moins un courant de purge et/ou un courant de ventilation.

8. Installation selon la revendication 7, comprenant en outre un échangeur de chaleur destiné au refroidissement du gaz de synthèse par échange de chaleur avec l'air ambiant et/ou l'eau de refroidissement.

9. Installation selon la revendication 7 ou 8, comprenant en outre un échangeur de chaleur destiné au refroidissement du gaz de fumée, dans laquelle l'échangeur de chaleur destiné au refroidissement du gaz de fumée se trouve dans une relation d'échange de chaleur avec au moins un réservoir pour la production d'une vapeur d'export et/ou d'une vapeur de traitement et/ou le dégazage thermique de l'eau d'alimentation des chaudières.

10. Installation selon l'une quelconque des revendications précédentes, comprenant en outre un dispositif de séparation mécanique destiné à la séparation du condensat formé dans le gaz de synthèse, ainsi qu'une évacuation du condensat du dispositif de séparation et une conduite d'amenée du condensat vers un réservoir pour la production d'une vapeur d'export et/ou d'une vapeur de traitement.

11. Installation selon l'une quelconque des revendications précédentes, comprenant en outre un dispositif de détente destiné à la détente de l'au moins un courant de purge, un dispositif de séparation destiné à la séparation du gaz de détente produit lors de la détente de l'au moins un courant de purge et des vapeurs de détente et un échangeur de chaleur destiné à la réalisation d'un échange de chaleur indirect entre les gaz de détente et les vapeurs de détente et le gaz résiduel de PSA.

12. installation selon l'une quelconque des revendications précédentes, comprenant en outre au moins une évacuation pour les gaz de détente et/ou les vapeurs de détente et/ou les courants de ventilation après la réalisation de l'échange de chaleur avec le gaz résiduel de PSA, ainsi qu'un dispositif de mélange destiné au mélange desdits gaz et/ou vapeurs avec le gaz de départ contenant de l'oxygène pour le fonctionnement du brûleur.
